# EUROPÄISCHE PATENTSCHRIFT

(11) **EP 2 152 543 B1**
(45) Veröffentlichungstag und Bekanntmachung des Hinweises auf die Patenterteilung: **21.01.2015**
(21) Anmeldenummer: 08735052.6
(22) Anmeldetag: 07.04.2008
(51) Int. Cl.: B60Q 1/10

(54) **VERFAHREN ZUR STEUERUNG DER OPTISCHEN ACHSE EINES FAHRZEUGSCHEINWERFERS**
METHOD FOR CONTROLLING THE OPTICAL AXIS OF A VEHICLE HEADLIGHT
PROCÉDÉ POUR COMMANDER L'AXE OPTIQUE D'UN PHARE DE VÉHICULE

(30) Priorität: 09.05.2007 DE 102007021675
(43) Veröffentlichungstag der Anmeldung: 17.02.2010
(73) Patentinhaber: Volkswagen Aktiengesellschaft, 38440 Wolfsburg (DE)
(72) Erfinder: DIERKS, Karsten, 38486 Klötze (DE); JAHRSAU, Bernd, 38524 Sassenburg (DE)
(86) Internationale Anmeldenummer: PCT/EP2008/002732
(87) Internationale Veröffentlichungsnummer: WO 2008/138435

(56) Entgegenhaltungen:
- EP-A- 0 803 401
- EP-A- 0 933 238
- DE-A1- 10 145 923
- DE-C1- 4 437 949

## Beschreibung

Die vorliegende Erfindung betrifft ein Verfahren zur Steuerung der optischen Achse eines Fahrzeugscheinwerfers.

Es ist allgemein vorbekannt, die optische Achse von Fahrzeugscheinwerfern in Relation zur Fahrzeugachse vertikal zu verstellen, um eine gewünschte Ausleuchtung der Fahrbahn vor dem Fahrzeug zu erreichen, so dass ausreichend Sicht für den Fahrzeugführer gegeben ist und eine Blendung entgegenkommender Fahrzeuge vermieden wird. In zunehmendem Maße werden hierfür automatisch arbeitende Systeme verwendet, welche die optische Achse im Stillstand und während der Fahrt auf eine gewünschte Lage einregeln.

Vorbekannt ist aus der EP 0 825 063 B1 eine Einrichtung zur automatischen Steuerung der Lage der optischen Achse eines Scheinwerfers. Die Einrichtung berechnet die Fahrzeugneigung aus der Messung des jeweiligen Abstandes der Karosserie zur vorderen und zur hinteren Fahrzeugachse mittels zweier Höhensensoren. Aus der Fahrzeugneigung wird ein entsprechender Ansteuerwinkel für die Scheinwerfer generiert, um eine gleichmäßige Ausleuchtung im Falle unterschiedlicher Beladung und bei Brems- bzw. Beschleunigungsvorgängen zu erreichen.

Weiterhin vorbekannt ist aus der EP 0 803 401 B1 eine Einrichtung zur automatischen Steuerung der optischen Achse eines Scheinwerfers. Die Ermittlung der Fahrzeugneigung erfolgt dabei auf Basis des Messwertes lediglich eines Höhensensors an einer Fahrzeuglängsseite, wobei der Höhenwert an der anderen Fahrzeuglängsseite auf Basis des ersten gemessenen Wertes geschätzt wird. Der Höhenversatz an der weiteren Fahrzeuglängsseite wird bestimmt, indem die Parameter der Federung und der Messung des Höhenversatzes der ersten Fahrzeuglängsachse ausgewertet werden. In einer weiteren Ausführungsform wird die Schätzung der weiteren Fahrzeuglängsachse durch Auswertung eines Beschleunigungsaufnehmers verifiziert, wobei dieser sich nahe der Achse befindet, deren Höhenversatz geschätzt wird und aus der Vertikalbeschleunigung durch zweifache Integration der Höhenversatz bestimmt wird.

Weiterhin vorbekannt ist aus der DE 699 27 318 T2 die Berechnung der Fahrzeugneigung aus lediglich einem Höhensensor, wobei dieser vorzugsweise am Fahrzeugheck angeordnet ist und die Höhe der Fahrzeugfront als Funktion der gemessenen Höhe am Fahrzeugheck bestimmt wird. Im Stillstand des Fahrzeuges wird die Neigung direkt aus der gemessenen hinteren Höhe mittels einer Kennlinie bestimmt. Im Fahrbetrieb des Fahrzeuges werden die Höhenwerte zur Neigungsberechnung aus der Höhe im Stillstand und dem gemessenen Höhenversatz durch die Messung der Fahrzeughöhe am Heck bestimmt, wobei geschwindigkeitsabhängig ein Korrekturfaktor einbezogen wird. Weiterhin wird in Abhängigkeit von der Fahrzeugbeschleunigung ein Filter für das berechnete Signal der Fahrzeugneigung gewählt.

Vorbekannt ist aus der DE 196 26 398 B4, mittels einer Varianzanalyse der Radbeschleunigungen und der Filterung der hochfrequenten Anteile eine Fahrbahnzustandserkennung durchzuführen, um für das ABS einer Fahrzeugbremse optimierte Daten für den Fahrbahnuntergrund bereitzustellen.

Vorbekannt ist aus der DE 38 12 600 C2 eine Antischlupfregelung, bei der Raddrehzahlen verschiedener Räder ausgewertet werden und eine Erkennung von Fahrbahnunebenheiten auf Basis der Radgeschwindigkeiten vorgenommen wird. Vorzugsweise werden dabei die Radgeschwindigkeiten jeweils einer Achse voneinander subtrahiert. Die Bewertung der Differenz der Radgeschwindigkeiten einer Achse führt zu einem Maß für die Fahrbahnunebenheit. Aus der Differenz der Radgeschwindigkeiten der vorderen zur hinteren Achse wird ein Schlupfwert gebildet, welcher für die Antischlupfregelung verwendet wird.

Schließlich ist aus der DE 44 37 949 C1 eine Leuchtweitenregelung für ein Fahrzeug bekannt, bei welchem in Abhängigkeit von der Beschleunigung bzw. Verzögerung des Fahrzeuges in Fahrzeuglängsrichtung die Scheinwerferstellung automatisch angepasst wird. Dabei wird die Drehzahl der Fahrzeugräder z.B. über ein Antiblockiersystem erfasst und aus den Drehzahlsignalen zur Längsbeschleunigung eine Nickbewegung des Fahrzeuges ermittelt.

Es ist Aufgabe der vorliegenden Erfindung, die optische Achse eines Scheinwerfers so zu steuern, dass eine gleichbleibend gewünschte Ausleuchtung vor dem Fahrzeug erzielt wird, wobei die Auswirkung der Fahrzeugneigung beispielsweise durch Brems- und Beschleunigungsvorgänge ausgeregelt wird. Die Anpassung der optischen Achse des ohne zusätzliche Beschleunigungsaufnehmer auskommen.

Diese Aufgabe wird erfindungsgemäß durch die kennzeichnenden Merkmale des Patentanspruches 1 gelöst.

Das erfindungsgemäße Verfahren dient zur Einstellung der optischen Achse eines Fahrzeugscheinwerfers. Auf Basis eines Signals der Fahrzeugneigung wird automatisch die optische Achse des Fahrzeugscheinwerfers in vertikaler Richtung eingestellt. Für die Ermittlung der Fahrzeugneigung wird dabei ein Höhensensor genutzt, der die Höhe eines Punktes der Fahrzeugkarosserie, vorzugsweise einer Fahrzeuglängsseite in Bezug zu einer Referenzebene misst. Weiterhin wird ein Messsignal der Fahrzeugbeschleunigung aus den Signalen von Radsensoren ermittelt. Erfingdungsgemäß wird die Höhe eines weiteren Punktes der Fahrzeugkarosserie, vorzugsweise der gegenüber dem Messpunkt liegenden Fahrzeuglängsseite in Bezug zur gleichen Referenzebene aus dem Signal der Fahrzeugbeschleunigung (a_{Fzg}) ermittelt. Die Höhe des Fahrzeuges zur Referenzebene wird an einem anderen Ort als dem Messort des Höhensensors ermittelt und aus den so ermittelten Höhenwerten und dem Abstand der Höhenwerte entlang der Fahrzeugachse wird die Fahrzeugneigung ermittelt. Erfindungsgemäß vorteilhaft wird somit nur ein Fahrzeughöhensensor benötigt, wobei das weitere Höhensignal zur Neigungsberechnung aus den Raddrehzahlsensoren unabhängig von der gemessenen Fahrzeughöhe ermittelt wird. Im Gegensatz zum Stand der Technik, bei dem die weitere Fahrzeughöhe auf Basis der gemessenen Höhe ermittelt wird, erfolgt die Ermittlung aus der Beschleunigung unabhängig vom Messwert des Höhensensors. Fehlerhafte Messungen im Höhensignal wirken sich damit weniger auf die Berechnung aus. Fehlmessungen aufgrund von Fahrbahnunebenheiten pflanzen sich in der Berechnung nicht fort, da die weitere aus der Beschleunigung gebildete Fahrzeughöhe unabhängig vom Messsignal ermittelt wird. Die Ermittlung der Fahrzeughöhe kann dabei gleichfalls aus einer Messung gegenüber den jeweiligen Fahrzeugachsen erfolgen. Die Fahrzeugachsen stellen dann die Referenzebene dar. Bevorzugt wird die Höhe der Karosserie an der hinteren Fahrzeugachse in Bezug zu dieser gemessen und die vordere Höhe der Karosserie zur vorderen Fahrzeugachse geschätzt. Als Abstand der beiden ermittelten Höhen kann dann zur Berechnung der Neigung der Radstand des Fahrzeuges genutzt werden.

In einer einfachen Ausführungsform wird die aus der Beschleunigung gebildete Fahrzeughöhe mittels einer Kennlinie ermittelt. Diese kann fahrzeugtypspezifisch versuchstechnisch ermittelt oder über eine Prozessmodellierung hergeleitet werden.

Erfindungsgemäß wird der Beschleunigungszustand des Fahrzeuges auf Basis der Raddrehzahlen, der Radgeschwindigkeiten oder der Radbeschleunigung der jeweiligen Einzelräder ermittelt, wobei in Abhängigkeit vom Beschleunigungszustand die Signale verschiedener Radsensoren der Einzelräder ausgewertet werden. Dabei werden die Radsensoren ausgewertet, die in Abhängigkeit vom Beschleunigungszustand den der "waren" Fahrzeugbeschleunigung am nahekommendsten Wert widerspiegeln. Bei einer positiven Fahrzeugbeschleunigung wird das Signal des Radsensors der Fahrzeugräder mit der geringsten Raddrehzahl oder Radgeschwindigkeit zur Berechnung der Fahrzeugbeschleunigung genutzt. Erfindungsgemäß vorteilhaft werden damit Fehler, welche durch den Schlupf der Räder beim Fahrzeugantrieb herrühren, vermieden. Bei einer negativen Fahrzeugbeschleunigung (Bremsvorgang) wird das Signal des Radsensors der Fahrzeugräder mit der größten Drehzahl oder Radgeschwindigkeit genutzt. Fehler durch den beim Bremsen auftretenden Schlupf an den Rädern werden damit minimiert. Bei nahezu konstanter Fahrzeuggeschwindigkeit ohne Beschleunigungsvorgänge wird ein Mittelwert von wenigstens zwei, vorzugsweise von allen Radsensoren zur Berechnung der Fahrzeugbeschleunigung genutzt, um diese möglichst genau zu ermitteln. Fehler durch verschiedene Fahrbahnbeläge oder durch Fahrbahnunebenheiten werden durch die Mittelung minimiert.

Weitere Einzelheiten der Erfindung werden in den Figuren anhand schematisch dargestellter Ausführungsbeispiele beschrieben.

Hierbei zeigen:
- Figur 1: eine Prinzipdarstellung eines Fahrzeuges mit einer Leuchtweitenregulierung,
- Figur 2: eine Prinzipdarstellung des erfindungsgemäßen Verfahrens zur Einstellung der optischen Achse eines Scheinwerfers,
- Figur 3: ein Diagramm der Bereiche unterschiedlicher Fahrzeugbeschleunigungen.

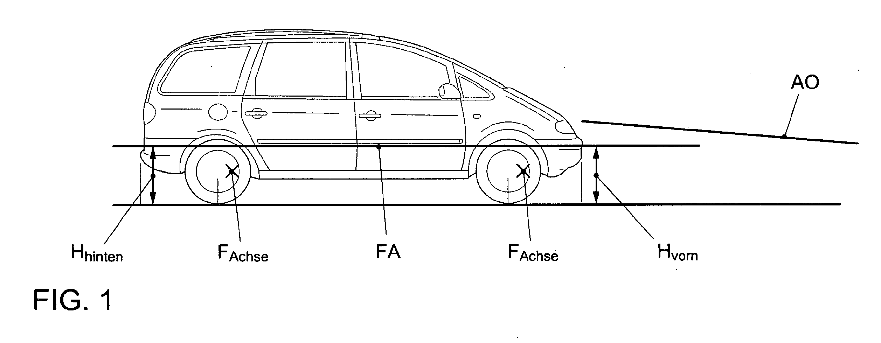

Anhand von Figur 1 sind in einer Prinzipskizze die geometrischen Zuordnungen der einzelnen Größen für die Leuchtweitenregulierung dargestellt. Eine schematisch dargestellte Straße S bildet dabei mit ihrer Oberfläche eine Bezugsebene. Anhand dieser Bezugsebene wird die Fahrzeughöhe zu einem definierten Punkt an der Fahrzeugkarosserie bestimmt. Für die Ermittlung der Neigung einer horizontalen Fahrzeugachse FA wird eine Höhe an der hinteren Fahrzeugkarosserie Hₕᵢₙₜₑₙ und eine Höhe an der vorderen Fahrzeugkarosserie Hᵥₒᵣₙ bestimmt. In einer bevorzugten Ausführung wird die hintere Höhe Hₕᵢₙₜₑₙ gemessen und die vordere Höhe Hᵥₒᵣₙ aus der Beschleunigung des Fahrzeuges, beispielsweise über eine Kennlinie, bestimmt. Die Höhe der Fahrzeugkarosserie kann gegenüber der Oberfläche der Straße S als Bezugsebene gemessen werden, es kann gleichfalls in einer nicht dargestellten Ausführung eine Messung der Höhe der Karosserie gegenüber der jeweiligen Fahrzeugachse F_{Achse} erfolgen. Es wird dabei bevorzugt die Höhe der Karosserie zur hinteren Fahrzeugachse F_{Achse} gemessen und die vordere Höhe zur vorderen Fahrzeugachse berechnet. Die Referenzebene zur Berechnung der Neigung bildet dann die Ebene durch die Fahrzeugachsen wobei sich die Messung bzw. Berechnung der jeweiligen Höhe auf diese referenzebene bezieht. Als Abstand des gemessenen vom berechneten Höhenwert wird in einfacher Weise der bekannte Radstand des Fahrzeuges genutzt. Weiterhin dargestellt ist die optische Achse AO des Scheinwerfers. Die Neigung dieser optischen Achse AO wird gegenüber der horizontalen Achse des Fahrzeuges FA bestimmt. Ziel der Leuchtweitenregulierung ist es, auf der Straße S vor dem Fahrzeug eine gewünschte Ausleuchtung gleichmäßig sicherzustellen. Bei einer Änderung der Fahrzeugachse FA gegenüber der Oberfläche der Straße S wird über Aktoren die Neigung der optischen Achse AO des Scheinwerfers angepasst, um eine gleichmäßige Ausleuchtung sicherzustellen. Die Messung an den jeweiligen Fahrzeugkanten ist hier beispielhaft dargestellt.

Es kann eine Messung in der Ebene der Achsen oder an anderen geeigneten Einbaulagen im Fahrzeug erfolgen. Für die Berechnung der Neigung muss lediglich der Abstand der gemessenen Höhe zu der aus der Beschleunigung berechneten Höhe entlang der Fahrzeugachse FA bekannt sein.

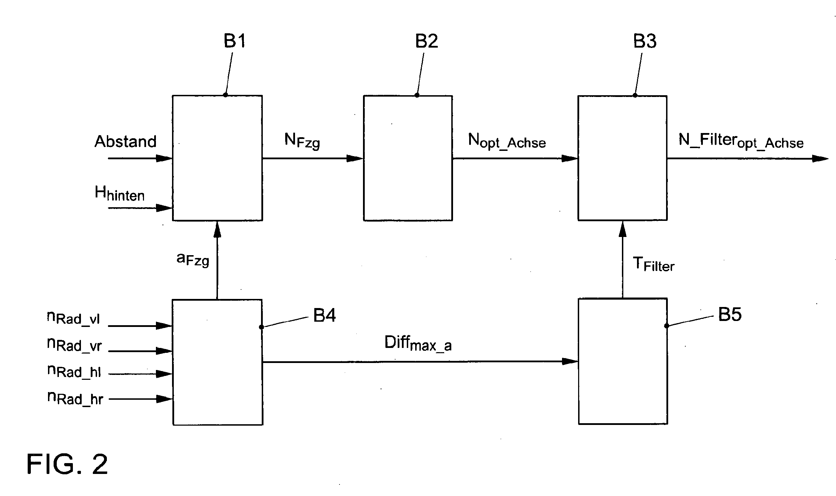

In Figur 2 ist das erfindungsgemäße Verfahren anhand eines Blockschaltbildes dargestellt. Einem ersten Block B1 liegt ein gemessenes Höhensignal der Fahrzeugkarosserie gegenüber einer Bezugsebene, vorzugsweise der Fahrzeughöhe des Fahrzeughecks Hₕᵢₙₜₑₙ gegenüber der Straßenoberfläche, an. Weiterhin liegt dem Block B1 der Abstand zwischen dem Ort des Messsignals und dem Ort, auf den sich die Höhenschätzung aus dem Beschleunigungssignal bezieht, entlang der Fahrzeugachse FA an. Weiterhin liegt dem Block B1 ein Beschleunigungssignal des Fahrzeuges a_{Fzg} an. Aus dem Beschleunigungssignal des Fahrzeuges a_{Fzg} wird über eine vorher bestimmte Kennlinie die Höhe eines Punktes der Fahrzeugkarosserie, hier beispielhaft die Höhe der vorderen Kante der Fahrzeugkarosserie Hᵥₒᵣₙ, gegenüber derselben Bezugsebene, wie für die Messung des Höhensignals angenommen, ermittelt.

In einem Block B2, dem die berechnete Fahrzeugneigung N_{Fzg} am Eingang anliegt, wird aus dieser eine für die gewünschte Ausleuchtung der Fahrbahn notwendige Neigung der optischen Achse des Scheinwerfers N_{opt_Achse} ermittelt. Die Neigung der optischen Achse des Scheinwerfers N_{opt_Achse} wird nachfolgend mit einem Filter mit einer Zeitkonstante T_{Filter} geglättet. Das gefilterte Signal der Scheinwerferneigung N_Filter_{opt_Achse} dient als Stellgröße für die Ansteuerung der Aktoren der Scheinwerfer. Entsprechend diesem Neigungswert werden die Verstellaktoren des Scheinwerfers angesteuert. Zur Auswahl der wirksamen Filterzeitkonstante T_{Filter} wird in einem Block B4 die Differenz der Radbeschleunigung der Einzelräder gebildet. Diese wird aus den Raddrehzahlen oder Radgeschwindigkeiten der Räder vorn links n_{Rad_vl}, vorn rechts n_{Rad_vr}. hinten links n_{Rad_hl}, hinten rechts n_{Rad_hr} gebildet. In einer bevorzugten Ausführungsform werden die Raddrehzahlen aller vier Räder genutzt und es wird eine maximale Differenz der Radbeschleunigungen Diff_{max_a} gebildet.

Die Bestimmung der Fahrzeugbeschleunigung variiert erfindungsgemäß in Abhängigkeit vom Beschleunigungszustand des Fahrzeuges. Da insbesondere bei starker positiver Beschleunigung des Fahrzeuges und bei Bremsvorgängen Drehzahlunterschiede zwischen den einzelnen Fahrzeugrädern auftreten, ist erfindungsgemäß vorgesehen, die Fahrzeugbeschleunigung a_{Fzg} auf Basis der Auswertung der Raddrehzahl, der Radgeschwindigkeit oder der Radbeschleunigung ausgewählter Fahrzeugräder zu messen. Es werden hierfür die einzelnen Raddrehzahlen, Radgeschwindigkeit oder Radbeschleunigungen der Einzelräder gemessen und miteinander verglichen. In einem positiven Beschleunigungszustand wird die Raddrehzahl, Radgeschwindigkeit oder Radbeschleunigung des Rades zur Ermittlung der Fahrzeugbeschleunigung a_{Fzg} genutzt, welche den kleinsten Messwert aufweist. In einem negativen Beschleunigungszustand des Fahrzeuges bei dessen Abbremsen wird die Raddrehzahl, Radgeschwindigkeit oder Radbeschleunigung des Rades zur Ermittlung der Fahrzeugbeschleunigung a_{Fzg} genutzt, welche den größten Messwert aufweist. Befindet sich das Fahrzeug in einem Zustand nahezu konstanter Geschwindigkeit ohne Beschleunigungsvorgänge wird vorzugsweise ein Mittelwert der Raddrehzahlen, Radgeschwindigkeiten oder Radbeschleunigungen der Einzelräder zur Ermittlung der Fahrzeugbeschleunigung a_{Fzg} genutzt. Hierbei wird bevorzugt ein Mittelwert aus den Messwerten aller Fahrzeugräder genutzt. Es ist alternativ möglich, eine Mittelwertbildung über nur zwei der Fahrzeugräder vorzunehmen.

Für die Messung können die Raddrehzahlen selbst, die Radgeschwindigkeiten oder die Radbeschleunigung genutzt werden. Die Radgeschwindigkeit kann beispielsweise direkt über die Auswertung der ABS-Sensoren gewonnen werden, indem die zeitlich aufeinanderfolgenden Impulse von ABS-Sensoren der den Fahrzeugrädern jeweilig zugeordneten Geberräder ausgewertet werden. Die Raddrehzahlen sind ebenfalls über die Auswertung der ABS-Sensoren ermittelbar. Die Radbeschleunigung wird bevorzugt durch Differentiation der Radgeschwindigkeit ermittelt.

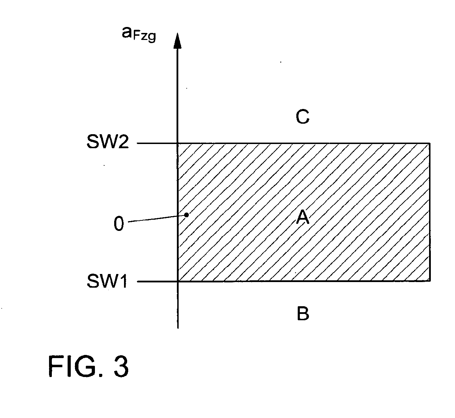

Figur 3 zeigt in einem Diagramm die Einordnung der verschiedenen Beschleunigungszustände eines Fahrzeuges. Auf der vertikalen Achse ist die Beschleunigung in positiver sowie negativer Richtung aufgetragen. Die Beschleunigungszustände des Fahrzeuges werden dabei anhand zweier Schwellwerte SW1 und SW2 bewertet. Zwischen den Beschleunigungsschwellwerten SW1 und SW2 in der mit A bezeichneten Ebene wird ein Zustand konstanter Fahrgeschwindigkeit mit nahezu nicht vorhandener Beschleunigung definiert. In diesem Fahrzustand erfolgt die Auswertung der Radsensoren aller Räder, wobei vorzugsweise ein Mittelwert aus den Messwerten aller Radsensoren gebildet wird. Unterschreitet die Beschleunigung den Schwellwert SW1, erfolgt in der mit B bezeichneten Ebene eine Auswertung lediglich des Radsensors des Rades, welches die größte Drehzahl oder Radgeschwindigkeit aufweist. Das Fahrzeug befindet sich hierbei in einem Zustand deutlich negativer Beschleunigung. Um Fehler aus dem bei Bremsvorgängen auftretenden Schlupf zu minimieren, wird die Drehzahl des Rades ausgewertet, welches die größte Drehzahl aufweist. Überschreitet die Fahrzeugbeschleunigung den Schwellwert SW2, erfolgt in der mit C bezeichneten Ebene eine Auswertung lediglich des Radsensors des Rades, welches die kleinste Drehzahl oder Radgeschwindigkeit aufweist. Die Fahrzeugbeschleunigung, welche anhand der Schwellwerte SW1, SW2 zur Einordnung des Beschleunigungszustandes des Fahrzeuges genutzt wird, kann dabei beispielsweise aus der im vorherigen Zyklus berechneten Fahrzeugbeschleunigung a_{Fzg} ermittelt werden. Weiterhin ist es möglich, diese auf Basis eines Mittelwertes der aktuell gemessenen Raddrehzahlen oder Radgeschwindigkeiten zu ermitteln.

## Patentansprüche

1. Verfahren zur Einstellung der optischen Achse (AO) eines Fahrzeugscheinwerfers, welches auf Basis eines Signals der Fahrzeugneigung (NFzg) die optische Achse (AO) des Fahrzeugscheinwerfers in vertikaler Richtung einstellt, wobei die Fahrzeugneigung (NFzg) aus einem Signal eines Höhensensors, der die Höhe des Fahrzeugs in Bezug zu einer Referenzebene misst, berechnet wird, und weiterhin ein Messsignal der Fahrzeugbeschleunigung (aFzg) ermittelt wird, wobei aus dem Signal der Fahrzeugbeschleünigung (aFzg) ein weiterer Wert einer Höhe des Fahrzeuges zur Referenzebene an einem anderen Ort als dem Messort des Höhensensors ermittelt wird und aus den so ermittelten Höhenwerten und dem Abstand der Höhenwerte die Fahrzeugneigung (NFzg) ermittelt wird,
**dadurch gekennzeichnet, dass**
- auf Basis der Raddrehzahlen, der Radgeschwindigkeiten oder der Radbeschleunigung der jeweiligen Einzelräder die Fahrzeugbeschleunigung (aFzg) ermittelt wird,
- wobei in Abhängigkeit vom Beschleunigungszustand des Fahrzeuges die Signale verschiedener Radsensoren der Einzelräder zur Berechnung der' Fahrzeugbeschleunigung (aFzg) ausgewertet werden, indem bei einer positiven Fahrzeugbeschleunigung das Signal des Radsensors der Fahrzeugräder mit der geringsten Raddrehzahl oder Radgeschwindigkeit und/oder bei einer negativen Fahrzeugbeschleunigung das Signal des Radsensors der Fahrzeugräder mit der größten Raddrehzahl oder Radgeschwindigkeit zur Berechnung der Fahrzeugbeschleunigung (aFzg) genutzt wird .

2. Verfahren nach Anspruch 1, **dadurch gekennzeichnet, dass** die aus der Fahrzeugbeschleunigung (aFzg) ermittelte Höhe des Fahrzeuges über eine vordefinierte Kennlinie ermittelt wird, in welcher die Zuordnung der Fahrzeughöhe als Funktion der Fahrzeugbeschleunigung abgebildet ist.

3. Verfahren nach einem der vorhergehenden Ansprüche 1 oder 2, **dadurch gekennzeichnet, dass** der Beschleunigungszustand des Fahrzeuges anhand von wenigstens einem Schwellwert für positive und einem Schwellwert für negative Fahrzeugbeschleunigung (aFzg) definiert wird und im Bereich zwischen den Schwellwerten eine nahezu konstante Fahrzeuggeschwindigkeit ohne Beschleunigungsvorgänge definiert wird.

4. Verfahren nach einem der vorhergehenden Ansprüche 1 - 3, **dadurch gekennzeichnet, dass** die hintere Höhe (Hhinten) gegenüber einer Referenzebene gemessen wird und die Höhe vorn (Hvorn) aus der Fahrzeugbeschleunigung (aFzg) ermittelt wird.

5. Verfahren nach einem der vorhergehenden Ansprüche 1 - 4, **dadurch gekennzeichnet, dass** die hintere Höhe (Hhinten) gegenüber der hinteren Fahrzeugachse (FAchse) gemessen und die Höhe vorn (Hvorn) gegenüber der vorderen Fahrzeugachse (FAchse) aus der Fahrzeugbeschleunigung (aFzg) ermittelt wird, wobei die Referenzebene durch die beiden Fahrzeugachsen verläuft und der Abstand der gemessenen und der berechneten Höhe zueinander durch den Radstand bestimmt ist.

## Claims

1. Method for setting the optical axis (AO) of a vehicle headlight, which sets the optical axis (AO) of the vehicle headlight in a vertical direction on the basis of a signal of the vehicle inclination (NFzg), the vehicle inclination (NFzg) being calculated from a signal of a height sensor which measures the height of the vehicle with reference to a reference plane, and a measurement signal of the vehicle acceleration (aFzg) further being determined, a further value of a height of the vehicle relative to the reference plane being determined, from the signal of the vehicle acceleration (aFzg), at a location other than the measurement location of the height sensor, and the vehicle inclination (NFzg) being determined from the height values thus determined and the spacing of the height values, **characterized in that**
- the vehicle acceleration (aFzg) is determined on the basis of the wheel rotational speeds, the wheel speeds or the acceleration of the respective individual wheels,
- the signals of different wheel sensors of the individual wheels being evaluated, as a function of the acceleration state of the vehicle, in order to calculate the vehicle acceleration (aFzg), this being done in such a way that the vehicle acceleration (aFzg) is calculated by using the signal from the wheel sensor of the vehicle wheels with the lowest wheel rotational speed or wheel speed, given a positive vehicle acceleration, and/or by using the signal of the wheel sensor of the vehicle wheels with the highest wheel rotational speed or wheel speed, given a negative vehicle acceleration.

2. Method according to Claim 1, **characterized in that** the height of the vehicle determined from the vehicle acceleration (aFzg) is determined via a predefined characteristic in which the assignment of the vehicle height is displayed as a function of the vehicle acceleration.

3. Method according to either of the preceding Claims 1 and 2, **characterized in that** the state of acceleration of the vehicle is defined with the aid of at least one threshold value for positive and one threshold value for negative vehicle acceleration (aFzg), and a virtually constant vehicle speed without acceleration events is defined in the region between the threshold values.

4. Method according to one of the preceding Claims 1-3, **characterized in that** the rear height (Hhinten) is measured in relation to a reference plane, and the height at the front (Hvorn) is determined from the vehicle acceleration (aFzg).

5. Method according to one of the preceding Claims 1-4, **characterized in that** the rear height (Hhinten) is measured in relation to the rear vehicle axle (FAchse), and the height at the front (Hvorn) is determined in relation to the front vehicle axle (FAchse) from the vehicle acceleration (aFzg), the reference plane running through the two vehicle axles, and the spacing of the measured and the calculated height from one another being determined by the wheel base.

## Revendications

1. Procédé de réglage de l'axe optique (AO) d'un projecteur de véhicule, qui règle l'axe optique (AO) du projecteur de véhicule en direction verticale sur la base d'un signal d'inclinaison du véhicule (NFzg), dans lequel l'inclinaison du véhicule (NFzg) est calculée à partir d'un signal d'un capteur de hauteur qui mesure la hauteur du véhicule par rapport à un plan de référence, et un signal de mesure d'accélération du véhicule (aFzg) est en outre déterminé, dans lequel une valeur supplémentaire d'une hauteur du véhicule par rapport au plan de référence est déterminée à partir du signal d'accélération du véhicule (aFzg) à une autre position utilisée en tant que position de mesure du capteur de hauteur, l'inclinaison du véhicule (NFzg) est déterminée à partir des valeurs de hauteur ainsi déterminées et de la distance entre les valeurs de hauteur,
**caractérisé en ce que**
- l'accélération du véhicule (aFzg) est déterminée sur la base des vitesses de rotation des roues, des vitesses des roues ou de l'accélération des roues des roues individuelles respectives,
- dans lequel les signaux de différents capteurs de roue des roues individuelles sont évalués en fonction de l'état d'accélération du véhicule pour calculer l'accélération du véhicule (aFzg) en utilisant le signal du capteur de roue des roues de véhicule présentant la vitesse de rotation de roue ou la vitesse de roue la plus faible lors d'une accélération positive du véhicule et/ou le signal du capteur de roue des roues de véhicule présentant la vitesse de rotation de roue ou la vitesse de roue la plus élevée est utilisée lors d'une accélération négative du véhicule pour calculer l'accélération du véhicule (aFzg).

2. Procédé selon la revendication 1, **caractérisé en ce que** la hauteur du véhicule déterminée à partir de l'accélération du véhicule (aFzg) est déterminée par l'intermédiaire d'une courbe caractéristique prédéfinie dans laquelle l'affectation des hauteurs de véhicule est représentée en fonction de l'accélération du véhicule.

3. Procédé selon l'une quelconque des revendications 1 ou 2 précédentes, **caractérisé en ce que** l'état d'accélération du véhicule est défini sur la base d'au moins une valeur de seuil pour une accélération de véhicule (aFzg) positive et d'une valeur de seuil pour une accélération de véhicule négative et **en ce qu'**une vitesse de véhicule pratiquement constante sans processus d'accélération est définie dans une zone comprise entre les valeurs de seuil.

4. Procédé selon l'une quelconque des revendications 1 - 3 précédentes, **caractérisé en ce que** la hauteur arrière (Hhinten) est mesurée par rapport à un plan de référence et **en ce que** la hauteur avant (Hvorn) est déterminée à partir de l'accélération du véhicule (aFzg).

5. Procédé selon l'une quelconque des revendications 1 - 4 précédentes, **caractérisé en ce que** la hauteur arrière (Hhinten) est mesurée par rapport à l'essieu arrière (FAchse), et la hauteur avant (Hvorn) est déterminée par rapport à l'essieu avant (FAchse) à partir de l'accélération du véhicule (aFzg), dans lequel le plan de référence passe par les deux essieux et la distance entre les hauteurs mesurée et calculée est déterminée à partir de l'empattement.
